# EUROPEAN PATENT APPLICATION

(11) **EP 2 033 544 A1**
(43) Date of publication of application: **11.03.2009**
(21) Application number: 08163282.0
(22) Date of filing: 29.08.2008
(51) Int. Cl.: A47D 13/02

(54) **Carry cot**

(30) Priority: 29.08.2007 GB 0716803
(71) Applicant: Britax Excelsior Limited, Andover, Hampshire SP10 3UW (GB)
(72) Inventor: Powell, Iain, Hampshire SP10 3UW (GB); Harcup, Anthony, London EC1R OBE (GB)
(74) Representative: Ablett, Graham Keith

(57) **Abstract**

The present invention relates to carry-cots, used for transporting infants. A carry-cot comprises an enclosure (2) for an infant, the enclosure having a rigid frame structure, wherein the frame structure comprises a substantially elongated hoop-like member (7) , which extends in a substantially horizontal plane of the cot, and a hooped or U-shaped reinforcing member (8), which extends in a substantially vertical plane of the cot.

## Description

The present invention relates to carry-cots, used for transporting infants.

In this regard, current carry-cot designs are based around a traditional "Moses basket" shape, this essentially comprising an elongated bath-like basket with a flat bottom and substantially vertical walls. Such baskets often have fabric handles allowing the carry-cot to be carried from one location to another.

These carry-cots are intended to be used in carrying infants, particularly young babies, where it is preferable to retain the baby in a horizontal or flat orientation. Keeping a baby in a flat orientation is considered preferable, particularly for pre-term babies, the incidence of which is increasing.

Such known carry-cots are not primarily designed with transport in vehicles in mind, although it is possible to secure them within a vehicle using an attachment kit. Such kits include standard seat belt couplings that allow the cot to be held on the back seat by way of the existing rear seat seatbelts.

However, recent crash tests carried out on known carry-cots have shown extremely poor results. For example, in a 40 mph crash test on a range of such known cots, the cots have completely disintegrated, with a baby dummy ending up in the car foot well.

It is an object of the present invention to provide a carry-cot which significantly enhances an infant's safety traveling therein compared with previous known carry-cots.

According to the present invention there is provided a carry-cot comprising:- an enclosure for an infant, the enclosure having a rigid frame structure, wherein the frame structure comprises a first reinforcing member, which extends in a substantially horizontal plane of the cot, and a second reinforcing member, which extends in a substantially vertical plane of the cot.

Preferably, the first reinforcing member is substantially an elongated hoop-like member. Conveniently, the second reinforcing member is substantially an elongated hoop-like member. In this regard, the provision of such a frame structure defines a safety cage of a capsule for protecting the infant. The arcuate nature of such hoop-like members affords enhanced resilience.

The first reinforcing member may be continuous and extend around the periphery of the cot. Such a structure affords a considerable reinforcing effect.

Preferably, the second reinforcing member is mounted on the first reinforcing member.

Conveniently, the second reinforcing member is formed in lower and upper sections, the upper section being articulated with respect to the lower section, and lockable in a substantially upright configuration so as to form a continuous hoop-like member together with the lower section. In this way, the second reinforcing member completes a "Roll-Cage" structure, providing enhanced protection for the infant.

Visual and/or audible indication means may be provided to indicate the orientation of the upper section.

Preferably, the indication means is associated with coupling means for mounting the cot within a vehicle, whereby an alarm indication is provided if the upper section in not locked in the upright orientation when mounting the cot in the vehicle.

Conveniently, the second reinforcing member performs as a carrying handle for the cot.

The interior of the cot may be profiled to closely match that of a recumbent infant. In this way, the infant has less opportunity to move in the event of a sudden deceleration, thereby reducing the likelihood of dangerous impulses being applied to the infant. The internal width of the cot substantially at the central point thereof along its longitudinal axis may be in the range 290 to 300 mm, more preferably 295 mm. The external width of the cot substantially at the central point thereof along its longitudinal axis may be in the range 435 to 445 mm, more preferably 440 mm.

In one embodiment of the invention, the height of the cot at the head end is preferably in the range of 275 to 280 mm, more preferably 280 mm.

In another embodiment of the invention, the height of the cot at the mid point is preferably in the range of 240 to 250 mm, more preferably 245 mm.

Also, the height of the cot at the foot end is preferably in the range of 255 to 265 mm, more preferably 260 mm.

Preferably, the cot has dedicated coupling points for attaching to a vehicle seat belt, wherein the coupling points are located such that they are above the centre of gravity of the cot. In this way, the kinematics of the cot are significantly improved in order to protect the infant, the cot initially pivoting such that its opening will face the vehicle seat. As such the infant will not spill out of the seat as is the case with current designs.

Conveniently, weight is distributed around the carry-cot so as to ensure the coupling points are located above its centre of gravity.

An example of the present invention will now be described with reference to the accompanying drawings, in which:-
Figure 1 shows a view of a cot according to the present invention;
Figure 2 shows an exploded view of the cot of Figure 1;
Figure 3 shows an exploded view of a lower assembly of the cot of the present invention;
Figure 4 shows a view of an upper assembly of the cot of the present invention; and
Figures 5A and 5B show simplified views of the kinematics of the cot in the event of a sudden deceleration.

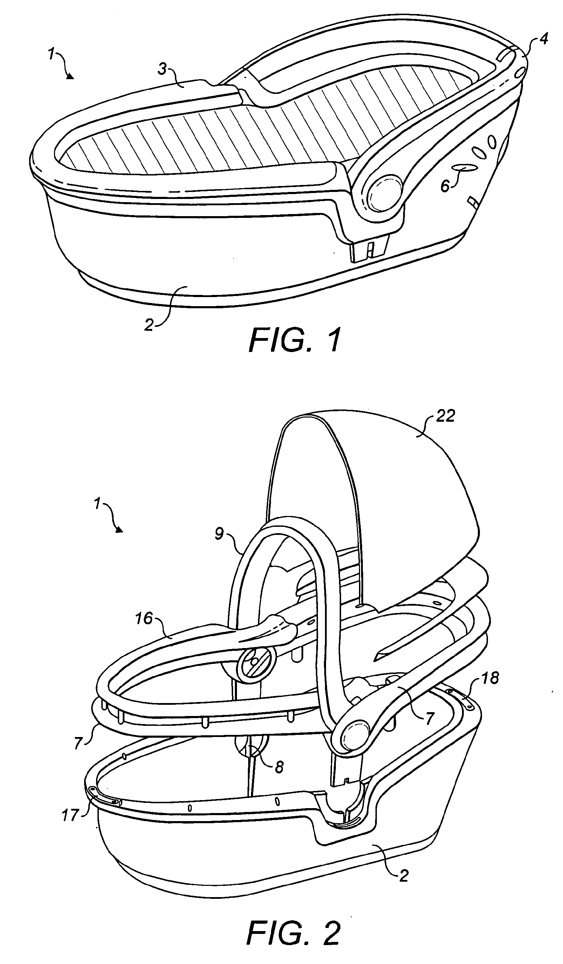

As shown in Figures 1 and 2, a carry-cot 1 comprises a lower assembly 2, an upper assembly 3 and a handle 4.

The lower assembly 2 provides a relatively narrow enclosure in which an infant (not shown) can comfortably lie. The enclosure is profiled in its interior to conform closely to an infant's profile to as to minimize the extent to which an infant would move in the event of a sudden deceleration of the cot, such as in an accident. In this regard, approximate dimensions of the cot are as follows: External Length: 880 mm; Internal length: 755 mm; Internal width at central point: 295 mm; External width at central point: 440 mm; External Height at foot end: 260 mm; External Height at head end: 280 mm; External Height at mid point: 245 mm.

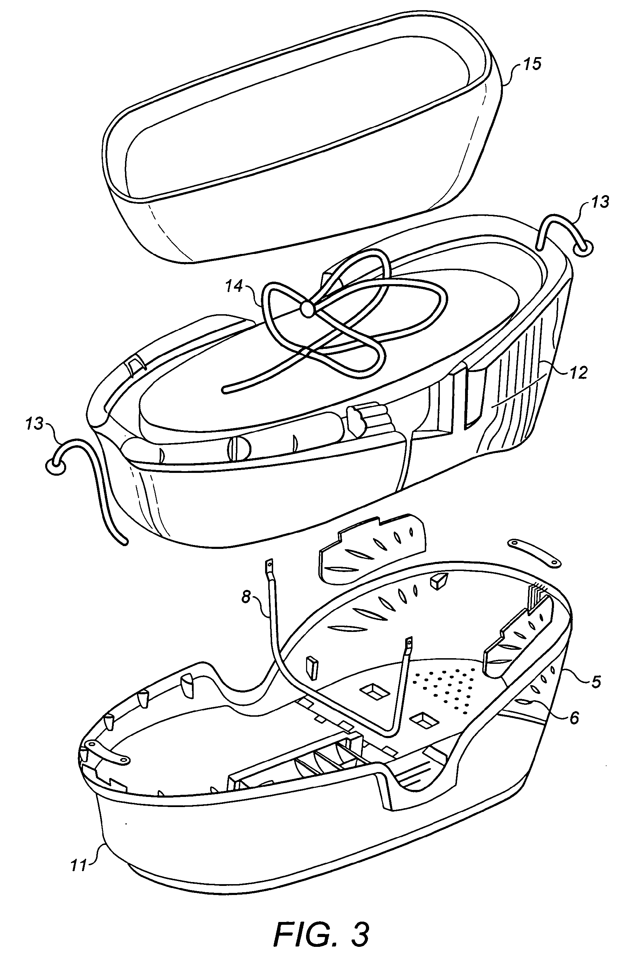

As shown in Figure 3, the lower assembly includes a shell 11, which encompasses a EPS liner 12. Tethers 13 and a 3/5-point harness 14 are provided within the construction. The harness is integrated into the lower assembly internal moulding with a raised fixing point for the crotch-strap. As such, the harness operates within the enclosure and does not need to pass through the outer shell 11. A fabric liner 15 covers the EPS liner.

The EPS liner provides additional comfort and impact protection to the infant. In this respect, the head end 5 of the lower assembly is raised in order to provide additional protection to the infant's head region.

Ventilation holes 6 are provided in the sides of the lower assembly at the head end.

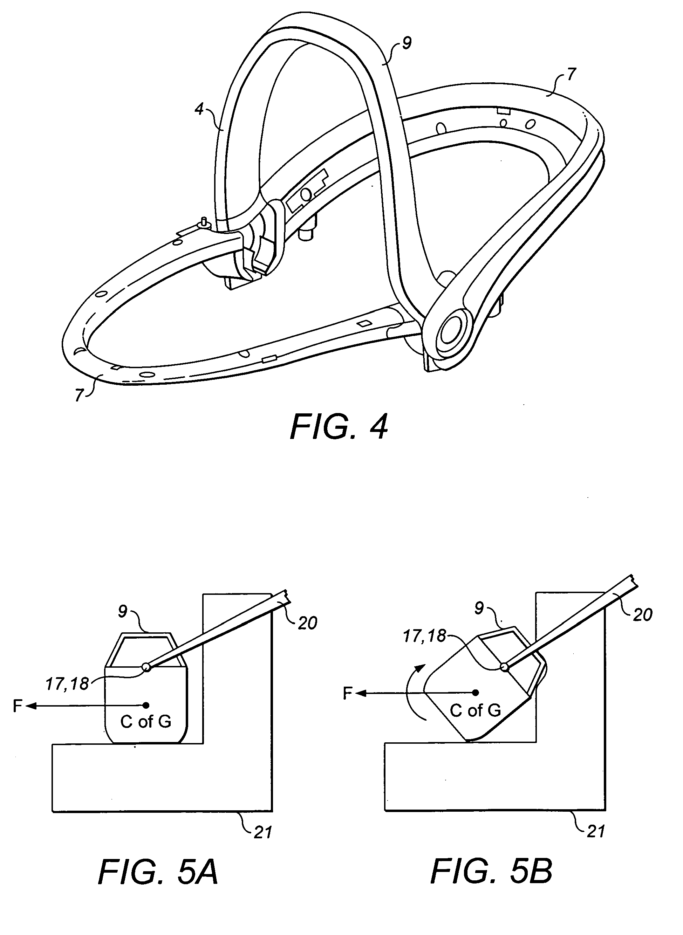

An upper assembly shown in Figure 4 comprises a reinforcing member in the shape of an elongated hoop 7 which extends substantially horizontally over the length of the cot. The hoop can be made with reinforcing materials, or may be formed so as to benefit from reinforcing properties. For example the hoop can be formed with metal, or perhaps carbon fibre materials, or may be moulded from plastics with a hollow channel(s) to add reinforcing properties.

As can be seen from Figure 3, the lower assembly also benefits from a reinforcing member, in this case a lower section bar 8, in a hooped or U-shaped configuration. With the lower and upper assemblies joined together, the horizontal hoop 7 and the lower section bar 8 together form a cage around the area where an infant would lie.

As depicted in Figure 4, the upper assembly furthermore comprises an upper section bar 9 formed in the handle 4, so that with the handle in an upright position, the upper section bar 9 and lower section bar 8 together form a full hoop running in a substantially vertical plane around the cot enclosure.

Hence with the handle in an upright position, as shown in Figure 2, the infant is protected by means of a safety cage or capsule, framed through a pair of reinforcing hoops surrounding the enclosure, the hoops extending substantially in respective horizontal and vertical planes.

Although not shown here, the handle can be provided with visual and/or audible indication means to indicate the orientation of the upper section. More particularly, the indication means may be associated with coupling means for mounting the cot within a vehicle, whereby an alarm indication is provided if the upper section is not in the upright orientation when mounting the carry-cot in the vehicle.

The horizontal hoop 7 is provided as a single component to which the lower section bar 8 and the upper sections bar 9 are mounted. The hoop is formed as part of an upper rim which is screwed down at several points onto the lower assembly 2. The rim includes a rubber capping 16 at its upper peripheral surface.

The cot is mounted within a vehicle by means of coupling points 17,18 provided high on the front and rear rim of the cot attaching to the vehicle's seat belt 20 on the back seat. The cot is weighted and the coupling points are positioned such that the coupling points are above the cot's centre of gravity © of g). Moreover, the relative narrowness of the cot is such as to promote the cot pivoting about its longitudinal axis on the vehicle seat in the event of a sudden deceleration.

In this respect, should the cot be subjected to a sudden deceleration, due to for example an accident, the cot will pivot such that the opening of the cot will turn to face vehicle seat as shown in simplified Figures 5A and 5B, which depict orientation of the cot before and during a rapid deceleration of the vehicle respectively. The frame structure formed by the pair of horizontal and vertical hoops will provide a safety capsule that cocoons the infant during this pivoting action. Moreover, the infant will urged into the cushioned floor of the cot during the deceleration. At some point, the forces on the cot will change as the vehicle comes to a stop, whereupon the cot will start to move towards the vehicle seat. The handle, housing the upper section bar will now act as a rebound bar, further protecting the infant from harm.

The upper assembly further includes a "disappearing" weather canopy 22, which is multi-segmented and folds completely out of the way when not required.

## Claims

1. A carry-cot comprising:-
an enclosure for an infant, the enclosure having a rigid frame structure, wherein the frame structure comprises a first reinforcing member, which extends in a substantially horizontal plane of the cot, and a second reinforcing member, which extends in a substantially vertical plane of the cot.

2. A carry-cot according to claim 1, wherein the first reinforcing member is substantially an elongated hoop-like member.

3. A carry-cot according to claim 1 or 2, wherein the second reinforcing member is substantially an elongated hoop-like member.

4. A carry-cot according to any one of claims 1 to 3, wherein the first reinforcing member is continuous and extends around the periphery of the cot.

5. A carry-cot according to any preceding claim, wherein the second reinforcing member is mounted on the first reinforcing member.

6. A carry-cot according to any one of claims 1 or 5, wherein the second reinforcing member is formed in lower and upper sections, the upper section being articulated with respect to the lower section, and lockable in a substantially upright configuration so as to form a continuous hoop like member together with the lower section.

7. A carry-cot according to claim 6, wherein visual and/or audible indication means are provided to indicate the orientation of the upper section relative to the lower section.

8. A carry-cot according to claim 7, wherein the indication means is associated with coupling means for mounting the cot within a vehicle, whereby an alarm indication is provided if the upper section in not in the upright orientation when mounting the vehicle.

9. A carry-cot according to any preceding claim, wherein the second reinforcing member performs as a carrying handle for the cot.

10. A carry-cot according to any preceding claim, wherein the interior of the cot is profiled to closely match that of a recumbent baby.

11. A carry-cot according to claim 10, wherein the cot has dedicated coupling points for attaching to a vehicle seat belt, wherein the coupling points are located such that they are above the centre of gravity of the cot.

12. A carry-cot according to claim 11, wherein weight is distributed around the cot so as to ensure the coupling points are located above its centre of gravity.

13. A carry-cot according to any preceding claim, wherein the internal width of the cot substantially at the central point thereof along its longitudinal axis is in the range 290 to 300 mm.

14. A carry-cot according to any preceding claim, wherein the external width of the cot substantially at the central point thereof along its longitudinal axis is in the range 435 to 445 mm.

15. A carry-cot according to any preceding claim, wherein the height of the cot at the foot end is in the range of 255 to 265 mm.
